# FASCICULE DE BREVET EUROPEEN

(11) **EP 1 101 928 B1**
(45) Date de publication et mention de la délivrance du brevet: **06.10.2004**
(21) Numéro de dépôt: 00403176.1
(22) Date de dépôt: 15.11.2000
(51) Int. Cl.: F02M 35/024

(54) **Filtre rechargeable à élément filtrant encliquetable**
Filter mit auswechselbarem Filterelement mit Schnappverbindung
Filter with disposable filter element fixed by click lock

(30) Priorité: 19.11.1999 FR 9914563
(43) Date de publication de la demande: 23.05.2001
(73) Titulaire: FILTRAUTO, 78180 Montigny le Bretonneux (FR)
(72) Inventeur: Maunder, David John, Wellow, Nottinghamshire NG22 0ED (GB); Palmer, Carl, New Basford, Nottingham NG 77 LJ (GB)
(74) Mandataire: Burbaud, Eric

(56) Documents cités:
- WO-A-95/09037
- WO-A-98/23356
- DE-A- 1 815 065
- DE-A- 2 750 201
- DE-A- 19 631 032
- US-A- 5 972 063

## Description

La présente invention est relative à un filtre pour moteur à combustion interne. Le filtre est plus particulièrement destiné à filtrer de l'air (voir par exemple DE-A-1815065).

Parmi les filtres en question, l'invention concerne plus spécialement ceux comprenant :
- une embase dotée d'un fond et de parois latérales qui s'étendent à partir du fond jusqu'à une extrémité débouchante, l'embase comportant un passage d'entrée et un passage de sortie,
- un élément filtrant logé dans l'embase pour être interposé entre le passage d'entrée et le passage de sortie, l'élément filtrant comprenant une ossature qui comporte des premier et deuxième flasques entre lesquels est interposée une paroi filtrante, les premier et deuxième flasques étant respectivement situés au voisinage de l'extrémité débouchante et du fond de l'embase.

Après un certain temps d'utilisation du filtre, l'élément filtrant logé dans l'embase du filtre est jugé encrassé. Il est alors nécessaire de le remplacer par un nouvel élément filtrant. Pour cela, un opérateur doit désolidariser l'ancien élément filtrant de l'embase et repositionner le nouvel élément filtrant. Ceci nécessite un nombre de pièces élevé et des manipulations qui ne sont pas toujours aisées, entraînant un coût élevé.

La présente invention a pour but de remédier aux inconvénients précités en fournissant un filtre dont le nombre de pièces est diminué et dont l'immobilisation et la désolidarisation de l'élément filtrant dans l'embase sont plus aisées.

A cet effet, selon l'invention, un filtre du genre en question est essentiellement caractérisé en ce que le boîtier comprend en outre des moyens d'immobilisation de l'élément filtrant qui font saillie à partir du fond de l'embase en direction de l'extrémité débouchante de cette embase en étant coaxiaux aux premier et deuxième flasques, et qui comportent une base solidaire du fond et une tête libre, la tête étant de section transversale de forme ovale, en ce que l'ossature de l'élément filtrant comprend des moyens de fixation qui coopèrent par encliquetage élastique avec la tête des moyens d'immobilisation pour permettre un montage de l'élément filtrant par emboîtement élastique et un démontage de l'élément filtrant par rotation dudit élément filtrant pour le déboîter élastiquement,
et en ce que l'ossature de l'élément filtrant et l'embase du boîtier comprennent des moyens d'étanchéité radiale.

Grâce à ces dispositions, on obtient un filtre dont la mise en position et le retrait de l'élément filtrant nécessitent aucun outil supplémentaire.

Dans des modes de réalisation préférés, on a recours en outre à une et/ou à l'autre des dispositions suivantes :
- les moyens de fixation comprennent un bossage creux qui est porté par le premier flasque et qui est tourné à l'opposé du deuxième flasque, et dont la forme intérieure est complémentaire de celle de la tête ;
- le bossage porte intérieurement un bourrelet et la tête comprend une gorge périphérique dans laquelle le bourrelet s'emboîte élastiquement pour retenir axialement l'élément filtrant dans l'embase ;
- le bossage est élastiquement flexible ;
- le premier flasque ferme l'extrémité débouchante de l'embase pour délimiter avec l'embase un volume intérieur creux dans lequel est logée la paroi filtrante de l'élément filtrant, le premier flasque possédant un bord périphérique qui comprend de moyens d'étanchéité radiale coopérant avec les parois latérales de l'embase ;
- la base et la tête des moyens d'immobilisation sont reliés par un tube central ;
- le tube central est de forme convergente depuis sa base vers sa tête ;
- la base du tube central communique avec le passage de sortie et le tube central est perméable ;
- le deuxième flasque de l'élément filtrant est de forme annulaire délimitant un bord interne et un bord externe, le bord interne étant en butée radiale étanche contre la base du tube central ;
- le passage d'entrée est ménagé dans les parois latérales de l'embase et le bord externe du deuxième flasque est en butée radiale étanche contre les parois latérale de l'embase ;
- l'élément filtrant comprend un tube perméable s'étendant entre une première extrémité qui porte le premier flasque et une deuxième extrémité qui porte le deuxième flasque, et autour duquel est placé la paroi filtrante, le tube central des moyens d'immobilisation étant coaxial au tube perméable ; et
- la hauteur de l'embase est supérieure à celle de l'élément filtrant, une chambre étant délimitée entre le deuxième flasque et le fond de l'embase.

D'autres caractéristiques et avantages de l'invention apparaîtront au cours de la description détaillée suivante de l'une de ses formes de réalisation, données à titre d'exemples non limitatifs, en regard des dessins annexés, sur lesquels :
- la figure 1 est une vue d'ensemble éclatée d'un premier mode de réalisation de l'élément filtrant et de l'embase du filtre selon la présente invention ;
- la figure 2 est une vue en coupe transversale de l'élément filtrant de la figure 1 ;
- la figure 3 est une vue d'ensemble des moyens d'immobilisation de l'élément filtrant portés par l'embase du filtre ;
- la figure 4 est une vue en coupe transversale de l'élément filtrant immobilisé dans l'embase du filtre ;
- les figures 5 et 6 sont des vues en coupe transversale, selon des deuxième et troisième modes de réalisation, de l'élément filtrant monté dans l'embase.

Sur les différentes figures, les mêmes références désignent des éléments identiques ou similaires.

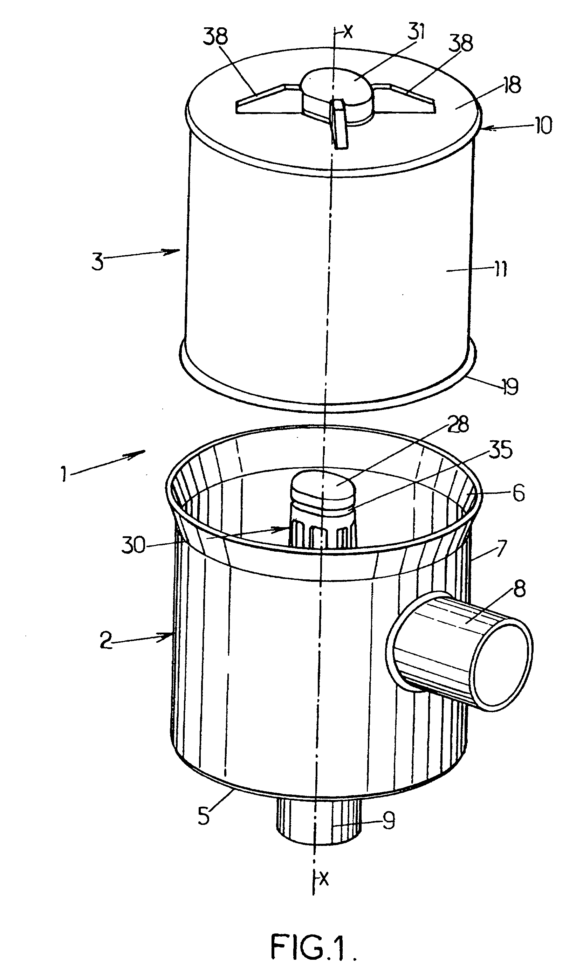

Le filtre 1 représenté de manière éclatée à la figure 1 est constitué d'une embase 2 et d'un élément filtrant 3 qui sont chacun de forme cylindrique de révolution autour d'un axe commun X-X.

L'embase 2 est un cylindre creux à base circulaire qui s'étend entre une extrémité pleine 5 qui définit le fond de l'embase et une extrémité débouchante 6. Entre le fond 5 et l'extrémité débouchante 6, l'embase 2 possède des parois latérales 7 auxquelles est relié un passage d'entrée 8 du gaz ou du liquide à filtrer. Dans le fond 5 de cette embase, est raccordé un passage de sortie 9 du gaz ou du liquide filtré.

L'embase 2 présente ainsi une section transversale en forme de "U" droit et est destinée à être montée dans une position fixe, par exemple par vissage directement sur une surface (non représentée) d'un moteur de véhicule automobile. L'extrémité débouchante 6 est en outre évasée vers l'extérieur. L'embase 2 est par exemple moulée par injection d'une matière plastique telle que du polyamide 6-6. D'autres matériaux pourraient toutefois être envisagés sans pour autant sortir du cadre de l'invention.

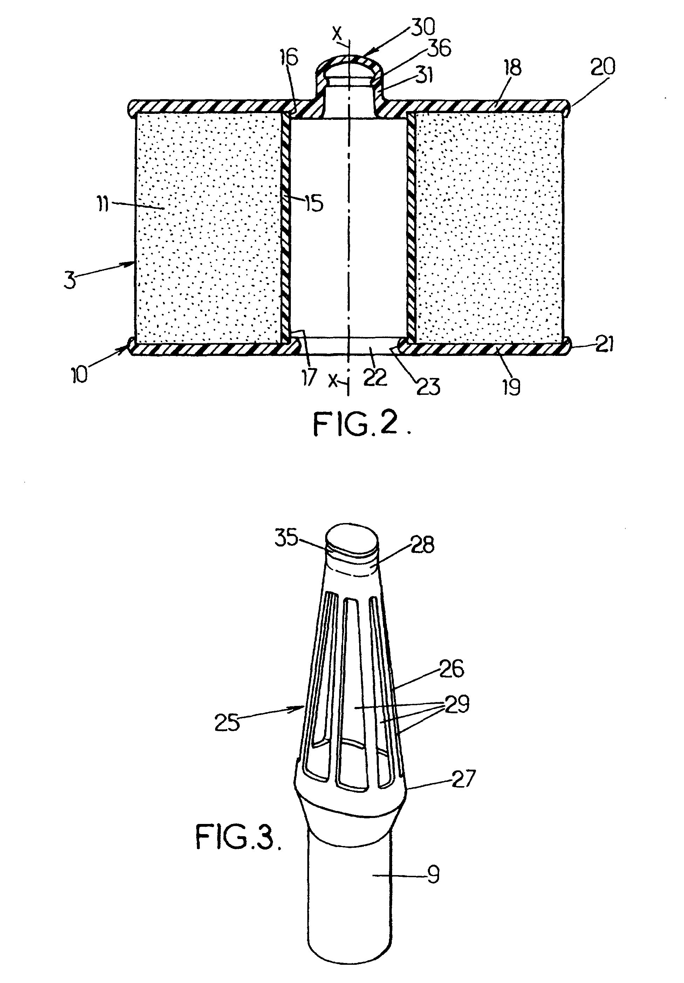

L'élément filtrant 3 représenté aux figures 1 et 2 comporte, de manière connue en soi, une ossature 10 qui supporte une paroi filtrante 11.

L'ossature 10 est constituée d'un tube perméable rigide 15 d'axe X-X, qui s'étend entre une première extrémité 16 et une deuxième extrémité 17. A chacune de ces extrémités est respectivement situé un premier flasque 18 et un deuxième flasque 19. Le premier 18 et le deuxième 19 flasques sont de forme plane, sensiblement perpendiculaires à l'axe X-X et possèdent chacun un bord externe 20, 21 destiné à venir au voisinage des parois latérales 7 de l'embase 2. En section transversale, l'ossature 10 présente une forme en "I".

La longueur du tube 15 est sensiblement égale à la hauteur de l'embase 2 de sorte que le premier flasque 18 est destiné à venir au voisinage de l'extrémité débouchante 6 de l'embase 2 et le deuxième flasque 19 est destiné à venir au voisinage du fond 5. Le deuxième flasque 19 possède en outre une ouverture centrale 22 délimitée par un bord interne 23 destiné à venir dans le prolongement du passage de sortie 9.

L'ossature 10 est également réalisée par injection de matière plastique ou encore les premier et deuxième flasques 18, 19 peuvent être réalisés en matériau métallique.

La paroi filtrante 11 est par exemple réalisée en papier filtre plissé et est disposée autour du tube rigide 15, en s'étendant entre les flasques 18 et 19. Afin de permettre le passage du gaz ou du liquide au travers de la paroi filtrante 11, le tube 15 est creux et perméable. Il communique avec le papier filtre de la paroi filtrante par exemple par l'intermédiaire de plusieurs ouvertures ménagées sur sa longueur (non représentées).

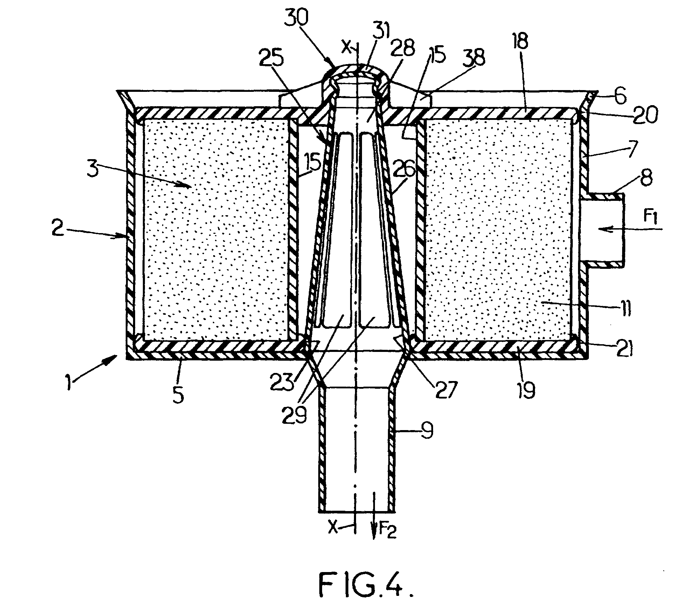

Comme le montre plus particulièrement la figure 4, l'élément filtrant 3 est logé à l'intérieur de l'embase 2 et est immobilisé par rapport à celle-ci. A cet effet, l'embase 2 possède des moyens d'immobilisation 25 de l'élément filtrant 3 qui font saillie à partir du fond 5 de l'embase 2 en direction de l'extrémité débouchante 6, en s'étendant au travers du tube 15 de l'ossature 10.

Les moyens d'immobilisation 25 consistent en un tube central 26 qui s'étend entre une base 27 solidaire du fond 5 de l'embase 2 et une tête libre 28. Le tube 26 est coaxial au tube 15 de l'ossature 10 et est de forme convergente depuis sa base vers sa tête. La longueur du tube central 26 est supérieure à celle du tube 15 de l'ossature. La base 27 et la tête 28 sont de forme, en section transversale, ovale. En variante, la base 27 est de forme circulaire.

La base 27 du tube central 26 est raccordée au passage de sortie 9 et le tube 26 possède, sur sa longueur, des ouvertures 29 de manière à laisser passer le gaz ou le liquide depuis la paroi filtrante 11 vers le passage de sortie 9.

L'ossature 10 de l'élément filtrant 3 possède des moyens de fixation 30 qui coopèrent par encliquetage élastique avec la tête 28 pour permettre un montage de l'élément filtrant 3 dans l'embase 2 par emboîtement élastique et un démontage de cet élément filtrant par rotation autour de l'axe X-X de l'élément filtrant pour le déboîter élastiquement.

Les moyens de fixation 30 consistent en un bossage creux 31 porté par le premier flasque 18 et tourné vers l'extérieur de l'ossature 10, c'est-à-dire à l'opposé du deuxième flasque 19.

Le bossage creux 31 est centré sur l'axe X-X et sa forme intérieure est complémentaire de la forme de la tête 28. Ainsi, la section transversale de la forme intérieure du bossage est ovale. L'élément filtrant 3 est donc immobilisé en rotation autour de l'axe X-X par la coopération du bossage 31 du premier flasque 18 et de la tête 28 solidaire de l'embase 2 qui sont de forme allongée.

Lorsque le bossage 31 est engagé sur la tête 28, le bord interne 23 du deuxième flasque 19 est en butée sur la base 27 du tube central 26 de sorte que l'élément filtrant 3 est immobilisé angulairement et ne peut pas pivoter autour de l'axe X-X.

Afin d'immobiliser axialement positivement l'élément filtrant 3 par rapport à l'embase 2, la tête 28 possède une gorge périphérique 35, dont le plan est perpendiculaire à l'axe X-X, et la tête 31 possède un bourrelet intérieur 36 qui coopère par encliquetage avec la gorge 35.

Le bossage 31 est réalisé en une matière élastiquement flexible afin de faciliter l'encliquetage du bossage 31 sur la tête 28 lors de la mise en place de l'élément filtrant 3 dans l'embase 2 et faciliter la déformation de ce bossage lors de la rotation de l'élément filtrant 3 autour de l'axe X-X pour désengager le bourrelet 36 de la gorge 35. Le bossage 31 peut être réalisé en un matériau plastique plus souple que celui du reste du premier flasque 18. Ce flasque peut donc être réalisé en deux matières plastique de duretés différentes.

Le premier flasque 18 a en outre pour fonction de fermer de manière étanche l'extrémité débouchante 6 de l'embase 2 de manière à délimiter un volume intérieur creux dans lequel est logée la paroi filtrante 11. Le bord périphérique 20 du premier flasque 18 est bombé de manière à assurer l'étanchéité radiale avec les parois latérales 7 de l'embase 2.

De même, le bord externe 21 et le bord interne 23 du deuxième flasque 19 sont tous les deux bombés de manière à venir respectivement en contact étanche avec les parois latérales 7 de l'embase 2 et la base 27 du tube central 26. Ainsi, lorsque le gaz ou le liquide entre selon le sens de la flèche F₁ par le passage d'entrée 8 dans la paroi filtrante 11, l'étanchéité radiale créée par les flasques 18 et 19 l'oblige à traverser le tube 15 de l'ossature 10, et le tube central 26 pour ressortir selon le sens de la flèche F₂ par le passage de sortie 9.

En variante, le bord externe 21 du deuxième flasque 19 n'est pas en contact étanche avec les parois latérales 7 de l'embase 2 de manière à pouvoir insérer ou retirer aisément l'élément filtrant 3 dans ou hors de l'embase.

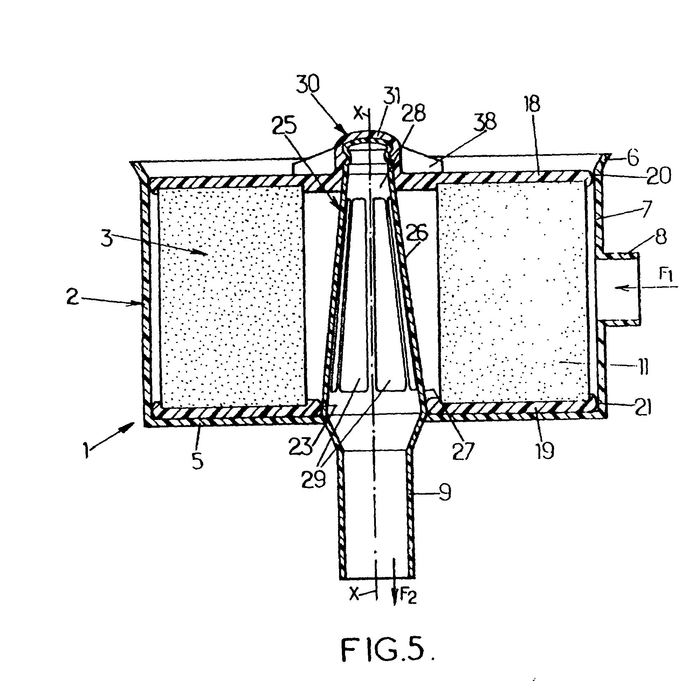

Le deuxième mode de réalisation représenté à la figure 5 diffère du premier mode de réalisation décrit précédemment uniquement par le fait que l'élément filtrant 3 ne possède pas de tube intérieur d'axe X-X. La paroi filtrante 11 est supportée directement par les premier et deuxième flasques 18 et 19. La rigidité de la paroi filtrante 11, suivant sa longueur, est suffisante pour réaliser un bon contact entre le bord interne 23 du deuxième flasque 19 et la base 27 du tube central 26, lors de la mise en place de l'élément filtrant 3 dans l'embase 2.

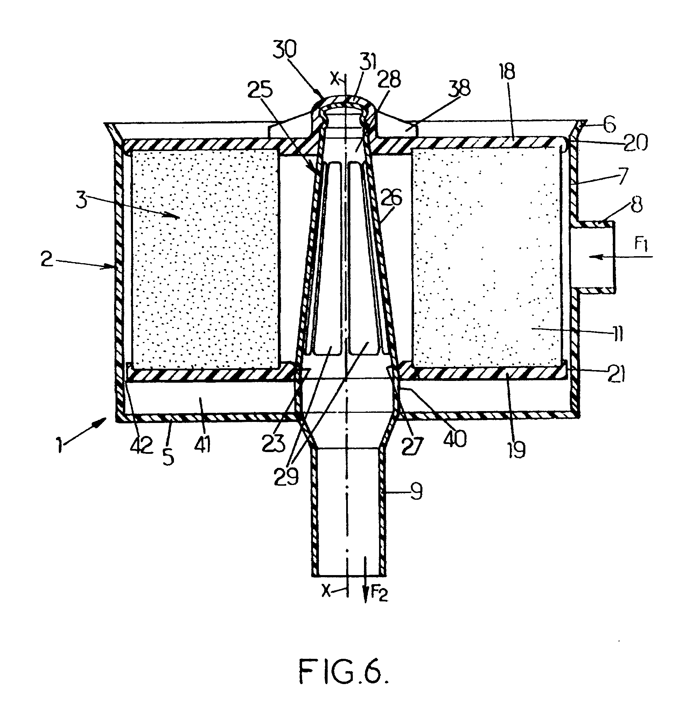

A la figure 6 est représenté un troisième mode de réalisation du filtre 1 selon la présente invention. Ce troisième mode diffère des deux précédents modes de réalisation par le fait que la hauteur de l'embase 2 est supérieure à celle de l'élément filtrant 3. Plus particulièrement, la base 27 du tube central 26 se prolonge par un tronçon 40 cylindrique à paroi pleine, le reste du tube central étant inchangé. La section transversale du tronçon 40 est sensiblement identique à celle de la base 27.

Dans ce troisième mode de réalisation, la hauteur des parois latérales 7 de l'embase 2 est donc augmentée d'une valeur égale à la longueur du tronçon 40. Le deuxième flasque 19 est encore en contact étanche avec la base 27 du tube central 26 et une chambre 41 est délimitée entre le fond 5 de l'embase 2 et le flasque 19.

Par ailleurs, le diamètre du deuxième flasque 19 est inférieur à celui de l'embase 2 ou du premier flasque 18 de sorte que le bord externe 21 du flasque 19 n'est plus en contact avec les parois latérales 7 de l'embase. Un passage annulaire 42 est ainsi délimité entre le deuxième flasque 19 et l'embase 2. Les particules résiduelles provenant de la filtration du gaz ou du liquide sont entraînées par gravité au travers du passage 42 dans la chambre 41 où elles s'accumulent.

## Revendications

1. Filtre pour moteur à combustion interne comprenant :
- une embase (2) dotée d'un fond (5) et de parois latérales (7) qui s'étendent à partir du fond (5) jusqu'à une extrémité débouchante (6), l'embase comportant un passage d'entrée (8) et un passage de sortie (9),
- un élément filtrant (3) logé dans l'embase pour être interposé entre le passage d'entrée (8) et le passage de sortie (9), l'élément filtrant (3) comprenant une ossature (10) qui comporte des premier (18) et deuxième (19) flasques entre lesquels est interposée une paroi filtrante (11), les premier (18) et deuxième (19) flasques étant respectivement situés au voisinage de l'extrémité débouchante (6) et du fond (5) de l'embase (2),
**caractérisé en ce que** le filtre (1) comprend en outre des moyens d'immobilisation (25) de l'élément filtrant (3) qui font saillie à partir du fond (5) de l'embase (2) en direction de l'extrémité débouchante (6) de cette embase (2) en étant coaxiaux aux premier (18) et deuxième (19) flasques, et qui comportent une base (27) solidaire du fond (5) et une tête libre (28), la tête (28) étant de section transversale de forme ovale,
**en ce que** l'ossature (10) de l'élément filtrant (3) comprend des moyens de fixation (30) qui coopèrent par encliquetage élastique avec la tête (28) des moyens d'immobilisation (25) pour permettre un montage de l'élément filtrant (3) par emboîtement élastique et un démontage de l'élément filtrant (3) par rotation dudit élément filtrant (3) pour le déboîter élastiquement,
et **en ce que** l'ossature (10) de l'élément filtrant (3) et l'embase (2) du boîtier (1) comprennent des moyens d'étanchéité radiale.

2. Filtre selon la revendication 1, dans lequel les moyens de fixation (30) comprennent un bossage creux (31) qui est porté par le premier flasque (18) et qui est tourné à l'opposé du deuxième flasque (19), et dont la forme intérieure est complémentaire de celle de la tête (28).

3. Filtre selon la revendication 2, dans lequel le bossage (31) porte intérieurement un bourrelet (36) et la tête (28) comprend une gorge périphérique (35) dans laquelle le bourrelet (36) s'emboîte élastiquement pour retenir axialement l'élément filtrant (3) dans l'embase (2).

4. Filtre selon la revendication 3, dans lequel le bossage (31) est élastiquement flexible.

5. Filtre selon l'une quelconque des revendications 2 à 4, dans lequel le premier flasque (18) ferme l'extrémité débouchante (6) de l'embase (2) pour délimiter avec l'embase (2) un volume intérieur creux dans lequel est logée la paroi filtrante (11) de l'élément filtrant (3), le premier flasque (18) possédant un bord périphérique externe (20) qui comprend de moyens d'étanchéité radiale coopérant avec les parois latérales (7) de l'embase (2).

6. Filtre selon l'une quelconque des revendications 2 à 5, dans lequel la base (27) et la tête (28) des moyens d'immobilisation (25) sont reliés par un tube central (26).

7. Filtre selon la revendication 6, dans lequel le tube central (26) est de forme convergente depuis sa base (27) vers sa tête (28).

8. Filtre selon la revendication 7, dans lequel la base (27) du tube central (26) communique avec le passage de sortie (9) et le tube central (26) est perméable.

9. Filtre selon la revendication 8, dans lequel le deuxième flasque (19) de l'élément filtrant (3) est de forme annulaire délimitant un bord interne (23) et un bord externe (21), le bord interne (23) étant en butée radiale étanche contre la base (27) du tube central (26).

10. Filtre selon la revendication 9, dans lequel le passage d'entrée (8) est ménagé dans les parois latérales (7) de l'embase (2) et le bord externe (21) du deuxième flasque (19) est en butée radiale étanche contre les parois latérale (7) de l'embase (2).

11. Filtre selon l'une quelconque des revendications 6 à 10, dans lequel l'élément filtrant comprend un tube perméable (15) s'étendant entre une première extrémité (16) qui porte le premier flasque (18) et une deuxième extrémité (17) qui porte le deuxième flasque (19), et autour duquel est placé la paroi filtrante (11), le tube central (26) des moyens d'immobilisation étant coaxial au tube perméable (15).

12. Filtre selon l'une quelconque des revendications 1 à 11, dans lequel la hauteur de l'embase (2) est supérieure à celle de l'élément filtrant (3), une chambre (41) étant délimitée entre le deuxième flasque (19) et le fond (5) de l'embase (2).

## Claims

1. A filter for an internal combustion engine comprising:
- a foundation body (2) provided with a base (5) and side walls (7) which extend from the base (5) up to an open end (6), the foundation body comprising an inlet passage (8) and an outlet passage (9),
- a filter element (3) disposed in the foundation body to be inserted between the inlet passage (8) and the outlet passage (9), the filter element (3) comprising a framework (10) which is made up of first (18) and second (19) plates between which is mounted a filter wall (11), the first (18) and second (19) plates being located adjoining the open end (6) and the base (5) of the foundation body (2) respectively,
- **characterised in that** the filter (1) comprises furthermore immobilising means (25) for the filter element (3) which project from the base (5) of the foundation body (2) towards the open end (6) of this foundation body (2) whilst being coaxial with the first (18) and second (19) plates, and which consist of a base (27) attached to the base (5) and of a free head (28), the head (28) having an oval transverse sectional shape,
- **in that** the framework (10) of the filter element (3) comprises fixing means (30) which interact through an elastic click lock with the head (28) of the immobilising means (25) in order to enable the filter element (3) to be fitted through elastic engagement and enable the filter element (3) to be dismantled by rotating the said filter element (3) in order to elastically disconnect same,
- and **in that** the framework (10) of the filter element (3) and the foundation body (2) of the housing (1) comprise radial sealing means.

2. A filter according to claim 1 in which the fixing means (30) comprise a hollow protrusion (31) which is supported by the first plate (18) and which faces away from the second plate (19) and whose internal shape complements that of the head (28).

3. A filter according to claim 2 in which the protrusion (31) supports on the inside a flange (36) and the head (28) comprises a peripheral channel (35) in which the flange (36) is elastically housed in order to hold the filter element (3) axially in the foundation body (2).

4. A filter according to claim 3 in which the protrusion (31) is elastically flexible.

5. A filter according to any of claims 2 to 4 in which the first plate (18) closes the open end (6) of the foundation body (2) in order to define with the said foundation body (2) an inner hollow volume in which the filter wall (11) of the filter element (3) is housed, the first plate (18) having an external peripheral edge (20) which comprises radial sealing means interacting with the side walls (7) of the foundation body (2).

6. A filter according to any of claims 2 to 5 in which the base (27) and the head (28) of the immobilising means (25) are connected through a central tube (26).

7. A filter according to claim 6 in which the central tube (26) is shaped converging from its base (27) to its head (28).

8. A filter according to claim 7 in which the base (27) of the central tube (26) communicates with the outlet passage (9) and the central tube (26) is permeable.

9. A filter according to claim 8 in which the second plate (19) of the filter element (3) has an annular shape defining an internal edge (23) and an external edge (21), the internal edge (23) being radially sealed abutting the base (27) of the central tube (26).

10. A filter according to claim 9 in which the inlet passage (8) is guided into the side walls (7) of the foundation body (2) and the external edge (21) of the second plate (19) is radially sealed abutting the lateral walls (7) of the foundation body (2).

11. A filter according to any of claims 6 to 10 in which the filter element comprises a permeable tube (15) extending between a first end (16) which supports the first plate (18) and a second end (17) which supports the second plate (19), and around which is located the filter wall (11), the central tube (26) of the immobilising means being coaxial with the permeable tube (15).

12. A filter according to any of claims 1 to 11 in which the height of the foundation body (2) is greater than that of the filter element (3), a chamber (41) being defined between the second plate (19) and the bottom (5) of the foundation body.

## Patentansprüche

1. Filter für einen Verbrennungsmotor mit
- einem Sitz (2), welcher mit einem Boden (5) und Seitenwänden (7) ausgestattet ist, welche sich vom Boden (5) aus bis zu einem offenen Ende (6) hin erstrecken, wobei der Sitz einen Einlass (8) und einen Auslass (9) aufweist;
- einem Filterelement (3), das in den Sitz derart eingesetzt ist, dass es zwischen dem Einlass (8) und dem Auslass (9) angeordnet ist, wobei das Filterelement (3) eine Tragkonstruktion (10) mit einem ersten (18) und einem zweiten Flansch (19) aufweist, zwischen denen eine Filterwand (11) angeordnet ist, wobei der erste (18) und der zweite Flansch (19) jeweils in der Nähe des offenen Endes (6) und des Bodens (5) des Sitzes (2) angeordnet sind,
**dadurch gekennzeichnet; dass** der Filter (1) ferner Mittel (25) zur Fixierung des Filterelements (3) umfasst, welche vom Boden (5) des Sitzes (2) aus in Richtung des offenen Endes (6) dieses Sitzes (2) koaxial zum ersten (18) und zum zweiten Flansch (19) hervorstehenden und eine mit dem Boden (5) fest verbundene Basis (27) sowie einen freien Kopf (28) umfassen, wobei der Kopf (28) einen ovalen Querschnitt aufweist,
dass die Tragkonstruktion (10) des Filterelements (3) Befestigungsmittel (30) umfasst, welche durch eine elastische Schnappverbindung mit dem Kopf (28) der Fixierungsmittel (25) zusammenwirken, um eine Montage des Filterelements (3) durch eine elastische Aufsteckverbindung zu ermöglichen sowie einen Ausbau des Filterelements (3) durch Drehen des Filterelements (3), um es elastisch aus der Aufsteckverbindung zu lösen, und dass die Tragkonstruktion (10) des Filterelements (3) und der Sitz (2) des Gehäuses (1) Mittel zur radialen Abdichtung umfassen.

2. Filter nach Anspruch 1, bei dem die Befestigungsmittel (30) eine Vertiefung (31) aufweisen, welche vom ersten Flansch (18) getragen wird und dem zweiten Flansch (19) entgegengesetzt ist, und deren Innenform als Gegenstück zur Form des Kopfes (28) ausgebildet ist.

3. Filter nach Anspruch 2, bei dem die Vertiefung (31) innenseitig eine Wulst (36) trägt und der Kopf (28) eine umlaufende Kehle (35) aufweist, in welche die Wulst (36) elastisch einsetzbar ist, um das Filterelement (3) axial im Sitz (2) festzuhalten.

4. Filter nach Anspruch 3, bei dem die Vertiefung (31) elastisch-flexibel ist.

5. Filter nach einem beliebigen der Ansprüche 2 bis 4, bei dem der erste Flansch (18) das offene Ende (6) des Sitzes (2) abschließt, um zusammen mit dem Sitz (2) ein inneres Hohlvolumen abzugrenzen, in welches die Filterwand (11) des Filterelements (3) eingesetzt ist, wobei der erste Flansch (18) einen umlaufenden Außenrand (20) aufweist, der Mittel zur radialen Abdichtung umfasst, welche mit den Seitenwänden (7) des Sitzes (2) zusammenwirken.

6. Filter nach einem beliebigen der Ansprüche 2 bis 5, bei dem die Basis (27) und der Kopf (28) der Fixierungsmittel (25) über ein mittiges Rohr (26) verbunden sind.

7. Filter nach Anspruch 6, bei dem das mittige Rohr (26) von der Basis (27) aus zum Kopf (28) hin konvergiert.

8. Filter nach Anspruch 7, bei dem die Basis (27) des mittigen Rohrs (26) mit dem Auslass (9) verbunden ist und das mittige Rohr (26) durchlässig ist.

9. Filter nach Anspruch 8, bei dem der zweite Flansch (19) des Filterelements (3) ringförmig ist, wodurch ein Innenrand (23) und ein Außenrand (21) abgegrenzt werden, wobei der Innenrand (23) radial abgedichtet gegen die Basis (27) des mittigen Rohrs (26) anliegt.

10. Filter nach Anspruch 9, bei dem der Einlass (8) in den Seitenwänden (7) des Sitzes (2) gebildet ist und der Außenrand (21) des zweiten Flansches (19) radial abgedichtet gegen die Seitenwände (7) des Sitzes (2) anliegt.

11. Filter nach einem beliebigen der Ansprüche 6 bis 10, bei dem das Filterelement (3) ein durchlässiges Rohr (15) umfasst, welches sich zwischen einem ersten, den ersten Flansch (18) tragenden Ende (16) und einem zweiten, den zweiten Flansch (19) tragenden Ende (17) erstreckt und um welches die Filterwand (11) angeordnet ist, wobei das mittige Rohr (26) der Fixierungsmittel (25) koaxial zum durchlässigen Rohr (15) ist.

12. Filter nach einem beliebigen der Ansprüche 1 bis 11, bei dem die Höhe des Sitzes (2) die Höhe des Filterelements (3) übersteigt, wobei eine Kammer (41) zwischen dem zweiten Flansch (19) und dem Boden (5) des Sitzes (2) abgegrenzt ist.
